Europäisches Patentamt

European Patent Office

Office européen des brevets

(11) Numéro de publication : **0 430 734 B1**

(12) **FASCICULE DE BREVET EUROPEEN**

(45) Date de publication du fascicule du brevet :
27.09.95 Bulletin 95/39

(51) Int. Cl.⁶ : **G06F 1/00**

(21) Numéro de dépôt : **90403114.3**

(22) Date de dépôt : **05.11.90**

(54) **Procédé et système d'exploitation sécurisée d'un logiciel.**

(30) Priorité : **23.11.89 FR 8915394**

(43) Date de publication de la demande :
**05.06.91 Bulletin 91/23**

(45) Mention de la délivrance du brevet :
**27.09.95 Bulletin 95/39**

(84) Etats contractants désignés :
**BE DE ES GB IT SE**

(56) Documents cités :
**EP-A- 0 135 422**
**EP-A- 0 314 148**
**WO-A-88/05941**
**FR-A- 2 606 185**

(73) Titulaire : **SCHLUMBERGER INDUSTRIES**
**50, avenue Jean Jaurès**
**F-92120 Montrouge (FR)**

(72) Inventeur : **Beysson, Daniel**
**17 route Nationale 307**
**F-78121 Crespieres (FR)**

(74) Mandataire : **Dronne, Guy et al**
**Cabinet Beau de Loménie**
**158, rue de l'Université**
**F-75340 Paris Cédex 07 (FR)**

EP 0 430 734 B1

## Description

La présente invention a pour objet un procédé et un système pour l'exploitation sécurisée d'un logiciel.

De façon plus précise la présente invention concerne la sécurisation de l'exploitation de logiciel par un utilisateur qui a acquis auprès d'un détenteur un droit d'utilisation de ce logiciel.

On sait que la protection des logiciels contre des copies illicites par l'utilisateur est très difficile et que cette protection correspond à un intérêt économique réel.

Pour protéger certains logiciels de valeur élevée contre une recopie illicite on a proposé d'associer au logiciel une mémoire externe par exemple du type ROM et qui doit être enfichée dans un port d'entrée/sortie du microordinateur sur lequel est exploité le logiciel. Si la mémoire externe n'est pas connectée au microordinateur il n'est pas possible de mettre en oeuvre le logiciel correspondant. Un tel système de protection présente l'inconvénient d'être passif. Il suffit donc au fraudeur d'analyser l'échange des signaux entre la mémoire externe et le microordinateur pour pouvoir ultérieurement simuler une mémoire externe, ce qui rend la protection caduque.

Pour éviter cet inconvénient on a également proposé d'associer au support principal d'information sur lequel est enregistré le logiciel qui doit être protégé un support d'information amovible qui est chargé dans un dispositif annexe au système principal d'exploitation du logiciel. Sur ce support amovible est stockée une partie du logiciel.

La partie principale du logiciel stockée sur le disque principal du micro-ordinateur n'est pas suffisante pour permettre l'exécution de l'ensemble du logiciel. Le support amovible est de préférence du type carte à mémoire électronique avec contrôle d'accès à la mémoire de la carte. Cette solution permet d'améliorer la protection du logiciel contre une copie mais elle présente l'inconvénient d'exiger de nombreux dialogues entre le dispositif principal d'exploitation du logiciel et le dispositif annexe dans lequel est introduite la carte à mémoire ce qui réduit très sensiblement la vitesse d'exécution du logiciel. C'est ce qui est décrit dans le document FR-A-2 606 185.

Le document WO-88/05941 propose d'associer à l'unité centrale une unité annexe de contrôle. L'unité centrale émet des messages vers l'unité annexe qui code ces messages puis restitue à l'unité centrale le message codé qui est comparé au message émis. Cette solution n'est que partielle puisqu'elle n'empêche pas physiquement l'exécution du logiciel par l'unité centrale.

Un objet de l'invention est de fournir un procédé d'exploitation de logiciel protégé contre des copies frauduleuses qui assure le même degré de protection que le système énoncé précédemment mais qui diminue des temps de transit entre le système principal d'exploitation et le système annexe.

Pour atteindre ce but, selon l'invention, le procédé d'exploitation d'un logiciel à l'aide d'un système comprenant au moins une unité principale d'exploitation dudit logiciel et une unité annexe d'exploitation pour recevoir un support amovible d'informations comportant au moins une zone mémoire et pour permettre l'échange d'informations entre ladite unité principale et ladite zone mémoire, caractérisé en ce qu'il comprend les étapes suivants :

- on définit dans ledit logiciel un certain nombre de commandes de demande de communication avec ladite unité annexe, lesdites commandes comprenant des premières commandes, chaque première commande étant associée à l'élaboration d'un résultat intermédiaire pour ledit logiciel et des deuxièmes commandes, chaque deuxième commande étant associée à une demande d'un résultat intermédiaire pour permettre l'exécution du logiciel;
- à l'apparition de chaque première commande, on transfère dans ladite zone mémoire du support amovible ledit résultat intermédiaire associé, afin que ledit résultat intermédiaire n'est plus disponible dans l'unité principale ; et
- à l'apparition de chaque deuxième commande, on lit dans ladite zone mémoire du support amovible un résultat intermédiaire et on le transfère dans ladite unité principale, par quoi ledit logiciel ne peut être complètement exécuté que si ledit support amovible convenable est présent dans ladite unité annexe.

On comprend qu'ainsi le logiciel ne peut être exploité si le support amovible d'informations n'est pas présent dans le système annexe d'exploitation. Toutefois la quantité d'informations transitant entre les deux systèmes est réduite, ce qui n'augmente pas sensiblement le temps d'exploitation. De plus le support amovible d'informations ne comporte initialement aucune information spécifique au logiciel auquel il est associé. Il en résulte que la programmation initiale de ce support est simplifiée.

Un autre objet de l'invention est de fournir un procédé d'exploitation de logiciel sécurisé qui permette en outre la location du logiciel en ne faisant payer l'utilisateur qu'en fonction du temps effectif d'exploitation dudit logiciel.

Un autre objet de l'invention est de fournir un système pour la mise en oeuvre du procédé énoncé ci-dessus. Un tel système est défini dans la revendication 7.

D'autres caractéristiques et avantages de l'invention apparaîtront plus clairement à la lecture de la description qui suit d'un mode de réalisation de l'invention donné à titre d'exemple non limitatif. La description se réfère au dessin annexé sur lequel:

La figure 1 est une vue d'ensemble du système d'exploitation du logiciel;

La figure 2 est un bloc diagramme du circuit de la carte à mémoire constituant le support amovible d'informations;

La figure 3 est un organigramme d'une partie du logiciel exploité par le système; et

la figure 4 est un organigramme des logiciels mis en oeuvre par le circuit de la carte.

Avant de décrire en détail un mode préféré de mise en oeuvre de l'invention on va en expliquer ci-après le principe.

Le logiciel qui est chargé initialement dans le système d'exploitation principal comporte la totalité des instructions nécessaires pour qu'il soit exécutable. Cependant ce logiciel comporte à certaines étapes des instructions qui commandent le chargement dans un support d'information annexe, de préférence une carte à mémoire électronique, de certains résultats intermédiaires, ces résultats intermédiaires n'étant pas mémorisés dans le système principal. Lorsque, dans le déroulement ultérieur du logiciel, ce résultat intermédiaire doit être utilisé le logiciel comporte une instruction de lecture du résultat intermédiaire dans le support d'information annexe et le logiciel peut alors être exécuté normalement dans le système principal. Afin d'éviter qu'un fraudeur ne puisse, à partir d'un ensemble licite constitué par le logiciel et une carte, illicitement analyser et mémoriser les signaux émis par l'unité principale vers l'unité annexe et réciproquement et simuler à partir de cet enregistrement la présence de la carte deux précautions principales sont prises. La première consiste à coder à l'aide de clés secrètes tirées de façon aléatoire les informations transitant entre l'unité principale et l'unité annexe. Pour toute demande de lecture dans la carte l'instruction émise par le système central est codé à l'aide d'une clé en cours. La réponse du système annexe est codée à l'aide d'une nouvelle clé et le système annexe transmet de plus une nouvelle clé aléatoire codée à l'aide de l'ancienne clé. Cette nouvelle clé devient la clé en cours. Lorsque le système central demande une modification des informations contenues dans la carte ces instructions sont codées par la clé en cours et cette clé en cours est maintenue.

La deuxième précaution prise consiste à s'assurer que le temps nécessaire pour l'exécution de différentes parties du logiciel n'est pas excessivement augmentée. En effet l'expérience montre que, lorsque l'on cherche à frauder un programme pour l'analyser et le mémoriser, ces opérations entrainent un retard ou une augmentation du temps nécessaire pour l'exécution de la partie correspondante du logiciel. Pour mettre en oeuvre cette deuxième précaution, à chaque fois qu'une demande de liaison entre l'unité centrale et l'unité annexe est faite, une information de durée est transmise vers le système annexe c'est à dire vers la carte. Cette information de durée est un majorant du temps qui doit normalement s'écouler lors de l'exécution du logiciel entre cette commande et la demande de communication entre l'unité centrale et l'unité annexe suivante. Cette information de durée est mémorisée dans la carte et elle est comparée au temps effectif qui s'écoule entre les deux demandes de mise en communication successives. Si le temps effectif est supérieur à l'information de durée de temps l'accès à la carte est inhibé rendant ainsi impossible l'exécution du logiciel.

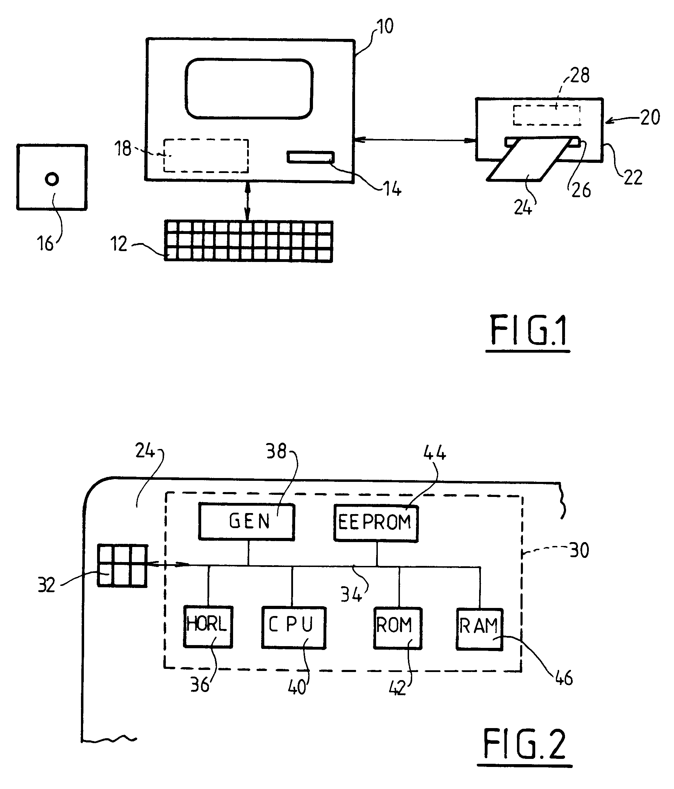

En se référant tout d'abord à la figure 1 on va décrire l'ensemble du système pour l'exploitation sécurisée d'un logiciel. Il comprend une unité principale d'exploitation du logiciel 10 de type classique. Sur la figure on a fait apparaître le clavier 12 d'entrée de données, la fente 14 du lecteur de support magnétique d'information 16 et la mémoire principale du disque dur 18 de l'unité principale. A l'unité principale 10 est associée une unité annexe 20 qui consiste dans un lecteur de carte à mémoire électronique 22. Le lecteur 22 comprend essentiellement un système de guidage de la carte à mémoire 24 dont on a représenté seulement la fente d'introduction 26 un connecteur non représenté et un circuit de traitement 28. Le circuit de traitement 28 a simplement pour but de recevoir les informations émises par l'unité principale 10 ou d'envoyer par celle-ci des informations lues dans la carte et de commander les opérations de lecture ou d'écriture dans le circuit intégré de la carte 24.

En se référant maintenant à la figure 2, on va décrire un mode de réalisation du circuit 30 de la carte 24. La carte 24 comprend des contacts externes 32 qui sont reliés notamment au BUS 34 du circuit 30. Reliés au BUS 34 on trouve les composants suivants : un circuit d'horloge 36 délivrant des impulsions de temps ; un générateur de nombres aléatoires au pseudo-aléatoires 38 ; une unité centrale de traitement 40, une mémoire de programme 42, du type ROM ; une mémoire de soldes successifs 44, du type EPROM ou EEPROM ; et une mémoire volatile 46 qui constitue d'une part une mémoire de travail pour l'unité centrale de traitement 40 et d'autre part une mémoire de stockage non permanent de résultats intermédiaires venant de l'unité prinipale de traitement 10. En d'autres termes la carte 24 est du type à microprocesseur.

La carte 24 peut avoir des contacts externes du type ISO ou des contacts multiples alignés disposés le long d'un bord de la carte.

La mémoire morte 42 est chargée d'un certain nombre de programmes dont la mise en oeuvre est effectuée par l'unité centrale de traitement 40. On trouve tout d'abord un programme GES de gestion des fonctionnalités du circuit de la carte et des sous-programmes spécifiques. Ces derniers comprennent : le sous-programme COD qui sert à coder une information émise vers l'unité principale 10 à l'aide d'une clé qui est soit délivrée par le générateur de nombres aléatoires 38 soit mémorisée temporairement dans la mémoire 46 ; le sous-programme DECOD qui set à décoder une information reçue de l'unité principale 10 à l'aide d'une clé mémorisée temporairement dans la mémoire 46 ; un sous-programme COMP qui sert à comparer une information de durée $t_n$ mémorisée dans la mémoire 46 à une information de temps écoulée $T_n$ élaborée à partir des implusions délivrées par l'horloge 36 et d'une information d'initialisation ; un sous-programme SOLDES qui sert d'une part à décrémenter une information de solde disponible mémorisée dans la mémoire 44 en fonction des informations de temps écoulé $T_n$ et d'autre part à émettre un signal d'alarme AL lorsque le solde dans la mémoire 44 devient nul ; un sous programme INTERRUPT qui permet d'interrompre l'incrémentation de l'information de temps écoulé $T_n$ à la réception d'un signal spécifique AR et de reprendre cette incrémentation à la réception d'un signal REP ; et un sous-programme INHIBIT qui permet d'interdire l'accès au circuit de la carte en fonction des résultats de la mise en oeuvre du sous-programme COMP. En d'autres termes le sous-programme INHIBIT est activé pour interdire l'accès au circuit de la carte 24 à chaque fois que le sous-programme COMPAR a détecté un dépassement de temps écoulé $T_n$ par rapport à l'information correspondante de durée $t_n$.

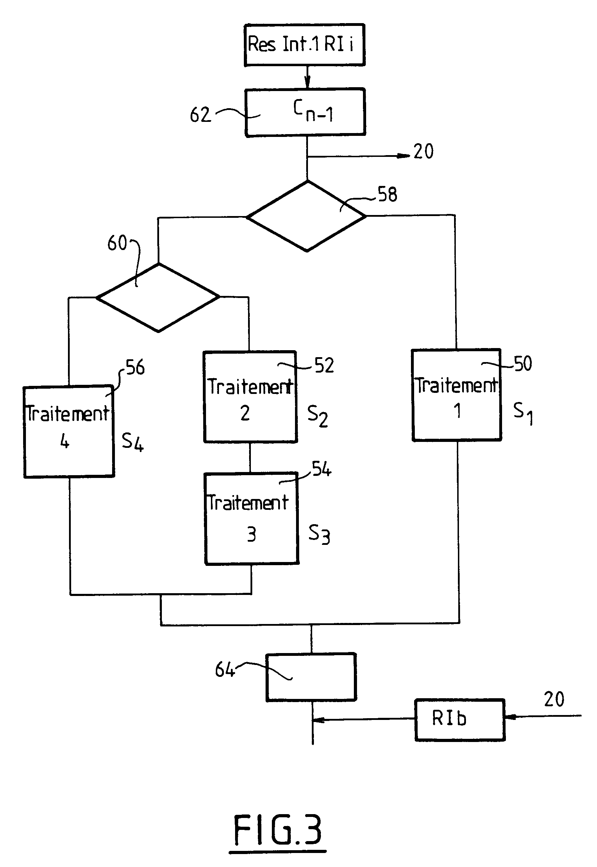

En se référant maintenant à la figure 3 qui montre une partie du logiciel L à exécuter, on va expliquer une autre partie de l'invention. Sur cette figure on a représenté sous forme d'organigramme une partie du logiciel L stocké sur le support 16, ce support ayant été remis à l'utilisateur en même temps que la carte de sécurisation 24. Le logiciel L est bien sûr chargé dans la mémoire centrale 18 de l'unité principale de traitement 10.

Comme le montre la figure 3, le logiciel L comporte des instructions qu'on trouverait dans ce logiciel s'il n'était pas sécurisé conformément à l'invention, et un nombre limité d'instructions qui sont spécifiques à la sécurisation du logiciel selon l'invention. On trouve des étapes de traitement 50, 52, 54, 56 et des étapes de test 58 et 60 qui correspondent au logiciel L "normal" c'est à dire non sécurisé. On trouve également des instructions de commande de mise en communication avec l'unité auxiliaire 20, c'est à dire avec le circuit 30 de la carte 24. L'ensemble des instructions 62 correspondant à la commande $C_{n-1}$ a pour but de transférer vers l'unité auxiliaire 20, et plus précisément vers la mémoire 46 du circuit de la carte un résultat intermédiaire $RI_i$ qui a été élaboré par l'exécution de parties du logiciel L qui précèdent celle qui est représentée sur la figure 3. Par cette commande $C_{n-1}$ le résultat intermédiaire $RI_i$ est mémorisée dans la carte et non dans l'unité centrale de traitement 10.

De même l'ensemble des instructions 64 correspondant à la commande $C_n$ est spécifique à la sécurisation du logiciel L selon l'invention. A ce stade d'exécution du logiciel L, celui-ci doit disposer d'un résultat intermédiaire $RI_b$ qui a été élaboré précédemment dans l'exploitation du logiciel. Comme on l'a expliqué précédemment le résultat intermédiaire $RI_b$ n'est pas mémorisé dans l'unité principale de traitement 10 mais uniquement dans la mémoire 46 du circuit de la carte 24. La commande $C_n$ établit la liaison avec l'unité auxiliaire 20 pour provoquer le transfert du résultat intermédiaire $RI_b$ vers l'unité principale 10 et permettre ainsi la poursuite du déroulement du logiciel L. On comprend dès à présent que, si la carte 24 n'est pas présente dans l'unité auxiliaire 20, le logiciel L ne peut plus être exploité.

Le logiciel L selon l'invention comporte un autre type d'informations spécifiques associées aux commandes $C_n$.

A chaque étape d'exécution du logiciel, 52 à 56 sur la figure 3, on peut associer un temps "normal" d'exécution, s1, s2, s3, s4. Donc entre les étapes de commande 62 et 64 on peut définir un temps total maximal d'exécution de cette partie du logiciel compte tenu des étapes de test 58 et 60. Dans le cas particulier de la figure 3, ce temps maximal d'exécution $t_{n-1}$ est donné par l'expression :

$$t_{n-1} = \sup (s1, s2 + s3, s4)$$

En même temps que la commande $C_{n-1}$ provoque le transfert du résultat intermédiaire $RI_i$ dans la mémoire de la carte 24, cette commande provoque le transfert de l'information de durée $t_{n-1}$. De même la commande $C_n$ provoque le transfert du résultat intermédiaire $RI_b$ de la carte 24 vers l'unité principale 10, et également celui de l'information de durée $t_n$ correspondant au temps "normal" d'exécution du logiciel L entre la commande $C_n$ et la commande suivante $C_{n+1}$ (non représentée sur la figure 3).

Afin d'accroître encore la sécurisation de l'exploitation du logiciel, les informations qui transitent de l'unité principale 10 vers l'unité auxiliaire 20 et de l'unité auxiliaire 20 vers l'unité principale 10 sont codées comme on l'a déjà indiqué succinctement. Le codage est effectué à l'aide de clés $f_n$ qui sont élaborées par le générateur de nombres aléatoires 38 du circuit 30 de la carte 24. Du fait du changement de clé de codage selon un processus qui sera explicité ultérieurement deux exploitations sucessives identiques du logiciel L correspondront à la transmission d'informations codées différentes entre l'unité principale 10 et l'unité annexe du fait du changement des clés. On comprend donc que l'ensemble des instructions 62 et 64 comprennent en fait la mise en oeuvre d'un algorithme de codage (62) ou de décodage (64) à l'aide d'une clé qui a été transmise par la carte à l'unité principale dans une étape précédente. Ce processus sera explicité en détail ultérieurement. On peut toutefois à ce stade de la description, donner les indications suivantes : A chaque instruction de commande $C_n$ consistant à demander la lecture d'un résultat intermédiaire $RI_j$ déjà mémorisé dans la carte, la carte répond en transmettant à l'unité principale 10 d'une part le résultat intermédiaire $RI_j$ codée à l'aide d'une nouvelle clé $f_n$ élaborée par le générateur de nombres aléatoires 38 et d'autre part la nouvelle clé $f_n$ codée à l'aide de la clé précédente $f_{n-1}$. A la réception de ces deux informations, l'unité principale décode la nouvelle clé $f_n$ à l'aide de la clé précédente $f_{n-1}$ qu'elle a déjà en mémoire et, à l'aide de cette nouvelle clé $f_n$, elle décode le résultat intermédiaire lu $RI_j$. Lorsqu'une commande $C_n$ émise par l'unité principale consiste dans la transmission à la carte 24 d'un nouveau résultat intermédiaire $RI_j$ qui doit y être mémorisé, le résultat intermédiaire est codé à l'aide de la valeur de clé $f_n$ en cours et elle est décodée par la carte à l'aide de cette même clé.

Il faut ajouter que le programme résident dans l'unité principale de traitement comporte un sous-programme INTERRUPT lié à la gestion des informations de durée $t_n$. Pour l'exécution de certaines parties du logiciel L, l'utilisateur doit introduire dans l'unité principale des données ou instructions externes à l'aide du clavier 12 associé à l'unité principale. On comprend que le temps d'introduction de ces informations externes dépend de l'application particulière faite du logiciel L et également, dans une certaine mesure de l'habileté de l'utilisateur pour taper ces informations sur ce clavier. L'information de durée normale d'exécution $t_n$ de la partie du logiciel incluant cette phase d'introduction de données externes est donc pratiquement impossible à déterminer à l'avance. Pour résoudre ce problème, à chaque fois que le logiciel L demande l'introduction d'une information à l'aide du clavier 12 ou toute autre opération dont la durée ne peut être déterminée à l'avance, le sous-programme INTERRUPT transmet à la carte 24 un signal AR qui interrompt le décompte des impulsions de temps délivrées par le circuit d'horloge 36. A la fin de l'introduction des données externes le sous-programme INTERRUPT transmet vers la carte 24 un signal REP qui commande la reprise du décompte des impulsions de temps. Ainsi la durée de la phase d'introduction de données n'est pas prise en compte dans la détermination du temps effectif $T_n$ qui s'écoule entre deux signaux de commande consécutifs. Le programme résident comporte aussi des moyens pour mémoriser la clé $f_n$ reçue du dispositif annexe et pour effacer la clé $f_{n-1}$ reçue précédemment.

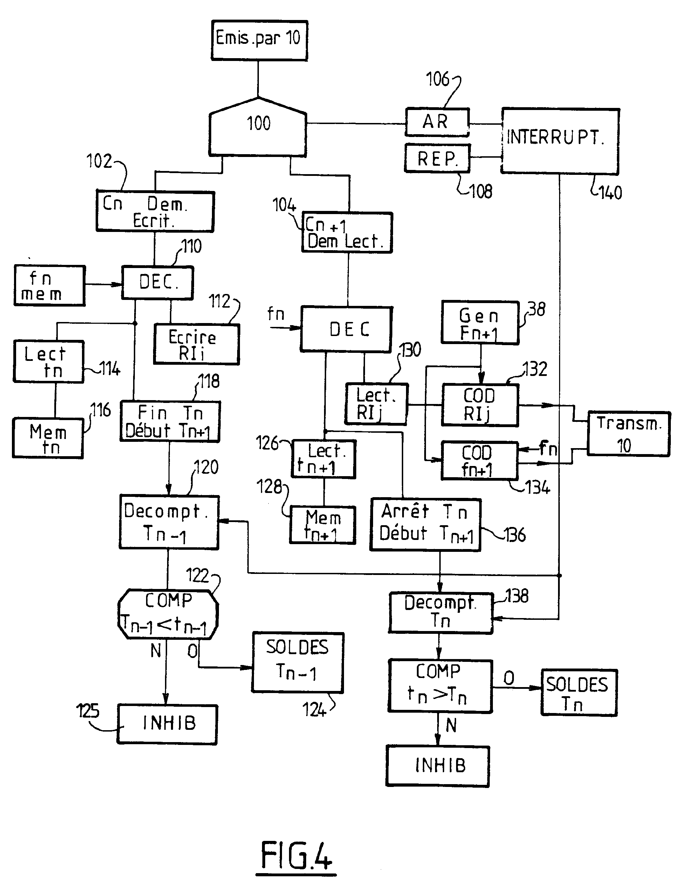

En se référant plus particulièrement à la figure 4 on va décrire le fonctionnement du système selon l'invention. La figure 4 montre l'organigramme du programme GES qui est stocké dans la mémoire 42 de la carte et qui est mis en oeuvre par l'unité centrale de traitement 40 du circuit de la carte.

A la réception d'un signal de l'unité principale 10 via le lecteur 20, le programme GES met en oeuvre un test 108 pour déterminer la nature du signal reçu. Il s'agit soit d'une commande $C_n$ de demande d'écriture dans la carte (102), soit d'une commande $C_{n+1}$ de demande de lecture dans la carte (104) ; soit d'un signal AR (106) soit encore un signal REP (108). On va d'abord décrire le déroulement du programme GES, dans le cas où l'information reçue est une commande de demande d'écriture (102). Le programme GES appelle le sous-programme DECOD (110) pour décoder l'information à l'aide de la clé courante $f_n$ qui est mémorisée dans la mémoire 46. Le résultat intermédiaire ainsi décodé $RI_i$ est écrit dans la mémoire 46 (112). Le message reçu contient également une information de durée $t_n$ (114) qui est mémorisée dans la mémoire 46 (116). La réception de cette commande $C_n$ provoque également en 118 l'arrêt du décompte (120) des impulsions délivrées par le circuit d'horloge 36 pour élaborer l'information de temps effectivement écoulé $T_{n-1}$ et l'initialisation (118) d'un nouveau décompte d'impulsions d'horloge pour l'élaboration d'une nouvelle information de temps effectivement écoulé $T_n$. Le programme GES appelle alors le sous programme COMP (122) pour comparer le temps effectivement écoulé $T_{n-1}$ à l'information de durée $t_{n-1}$ précédemment reçue. Si $T_{n-1} < t_{n-1}$, c'est à dire si le logiciel L a été normalement exécuté, le programme GES appelle le sous-programme SOLDES (124) qui décrémente, dans la mémoire 44 le solde précédent d'un montant correspondant à la durée effective d'utilisation $T_{n-1}$. De plus l'information $t_{n-1}$ est effacée de la mémoire 46. Dans le cas contraire ($T_{n-1} > t_{n-1}$) c'est qu'il y a eu une tentative de fraude et le programme GES appelle le sous-programme INHIB (125) qui interdit l'accès au circuit de la carte 24 à partir de l'unité principale 10. Le logiciel L ne peut plus être exploité.

On va maintenant décrire le déroulement du programme GES dans le cas où le test 100 a détecté la réception d'une commande $C_{n+1}$ de demande de lecture (104). Le programme GES appelle le sous-programme DECOD pour décoder les informations reçues à l'aide de la clé courante $f_n$ stockée dans la mémoire 46. On obtient ainsi une nouvelle information de durée $t_{n+1}$ (126) qui est mémorisée dans la mémoire 48 (128). Puis l'information intermédiaire $RI_j$ est lue dans la mémoire 46 à l'adresse convenable (130). Le programme GES appelle alors le sous-programme COD. A l'aide du sous-programme COD le résultat intermédiaire $RI_j$ est codé avec une nouvelle clé $f_{n+1}$ délivrée par le générateur de nombres aléatoires 38. De même la nouvelle clé $f_{n+1}$ est codée à l'aide de la clé précédente $f_n$ mémorisée (134). L'ancienne clé $f_n$ est effacée de la mémoire 46 et remplacée par la clé $f_{n+1}$. Comme dans le cas d'une commande de demande d'écriture, le programme GES va gérer les opérations de contrôle du temps d'exécution. A la réception de ces informations, le décompte du temps effectif écoulé $T_n$ est arrêté (136) et une nouvelle phase de décompte des impulsions d'horloge (138) est initiée pour la détermination du nouveau temps effectif écoulé $T_{n+1}$. Puis le programme GES appelle le sous-programme COMP pour comparer le temps effective-

ment écoulé $T_n$ à l'information de durée $t_n$ correspondante précédemment reçue.

Si $T_n<t_n$ le logiciel L a été correctement exécuté et le programme GES appelle le sous programme SOLDES pour décrémenter dans la mémoire 44 de la carte le solde disponible d'un montant correspondant au temps effectif d'utilisation $T_n$. Si $T_n>t_n$ c'est qu'il y a eu une tentative de fraude et le programme GES appelle le sous-programme INHIB pour interdire l'accès au circuit de la carte 24.

L'étape de test 100 peut également détecter que l'information reçue est le signal AR (106) ou le signal REP (108). Dans ce cas le programme GES appelle le sous programme INTERRUPT. Si c'est l'information qui est reçue AR le sous programme INTERRUPT (150) commande l'arrêt du décompte des impulsions de temps servant à élaborer les informations de temps effectif écoulé $T_{n-1}$ ou $T_n$ (120, 138). Si le signal reçu est le signal REP le sous-programme INTERRUPT commande la reprise du décompte des impulsions de temps.

Dans la description précédente les circuits de la carte 24 n'élaborent une nouvelle clé que si elle reçoit une commande de lecture d'un résultat intermédiaire déjà mémorisé. Selon une variante de mise en oeuvre de l'invention, la carte émet une nouvelle clé également en réponse à une commande d'écriture dans la carte. L'émission de cette nouvelle clé est associée à l'émission d'un signal d'acquittement.

Selon les modes de réalisation précédemment décrits la carte à mémoire ne comporte aucune information spécifique au logiciel particulier avec lequel elle est remise ce qui simplifie bien sûr la programmation initiale de la carte. Il est toutefois possible de prévoir que la carte contienne, par exemple dans la mémoire 44 une information fixe spécifique au logiciel auquel elle est associée. Dans ce cas, à chaque fois que la carte est appelée on vérifie que l'information spécifique est bien celle qui est associée au logiciel en cours d'exploitation sur l'unité principale 10.

Enfin il faut souligner que l'invention permet une facturation de la "location" du logiciel en fonction du temps effectif d'utilisation. En effet lorsque l'utilisateur reçoit un exemplaire du logiciel avec la carte associée, la mémoire 44 comporte un montant initial correspondant à un crédit de temps d'utilisation du logiciel. Au fur et à mesure de l'exploitation du logiciel le solde est décrémenté. Lorsque ce solde devient nul, l'utilisateur doit verser une nouvelle somme pour qu'on charge dans sa carte un nouveau montant initial correspondant à une nouvelle "location" du logiciel.

## Revendications

1. Procédé d'exploitation d'un logiciel à l'aide d'un système comprenant au moins une unité principale d'exploitation dudit logiciel et une unité annexe d'exploitation pour recevoir un support amovible d'informations comportant au moins une zone mémoire et pour permettre l'échange d'informations entre ladite unité principale et ladite zone mémoire, caractérisé en ce qu'il comprend les étapes suivants :
   - on définit dans ledit logiciel un certain nombre de commandes de demande de communication avec ladite unité annexe, lesdites commandes comprenant des premières commandes ($C_n$), chaque première commande étant associée à l'élaboration d'un résultat intermédiaire pour ledit logiciel et des deuxièmes commandes ($C_n$), chaque deuxième commande étant associée à une demande d'un résultat intermédiaire pour permettre l'exécution du logiciel ;
   - à l'apparition de chaque première commande ($C_n$), on transfère dans ladite zone mémoire du support amovible ledit résultat intermédiaire associé, afin que ledit résultat intermédiaire n'est plus disponible dans l'unité principale; et
   - à l'apparition de chaque deuxième commande ($C_n$), on lit dans ladite zone mémoire du support amovible un résultat intermédiaire et on le transfère dans ladite unité principale, par quoi ledit logiciel ne peut être complètement exécuté que si ledit support amovible convenable est présent dans ladite unité annexe.

2. Procédé selon la revendication 1, caractérisé en ce que, dans ledit logiciel, on associe à au moins certaines commandes ($C_n$) une information de durée ($t_n$) qui est au moins égale au temps d'exécution normale dudit logiciel entre ladite commande ($C_n$) et la commande suivante ($C_{n+1}$) ; on transmet à ladite unité annexe ladite information de durée ($t_n$) et on compare dans ladite unité annexe le temps qui s'écoule effectivement entre la réception de deux commandes successives et l'information de durée $t_n$ ; et on inhibe ou non l'accès à ladite unité annexe en fonction du résultat de ladite comparaison.

3. Procédé selon l'une quelconque des revendications 1 et 2, caractérisé en ce qu'à la réception de chaque deuxième commande ($C_n$), ladite unité annexe transmet une réponse codée à l'aide d'une nouvelle clé secrète ($f_{n+1}$) et une nouvelle clé secrète ($f_{n+1}$) codée à l'aide de la clé précédente ($f_n$).

4. Procédé selon la revendication 2, dans lequel ledit logiciel est loué par un détenteur à un utilisateur, caractérisé en ce qu'on définit de plus dans la zone mémoire dudit support amovible une deuxième zone de soldes monétaires, en ce qu'au moment de la fourniture du logiciel on inscrit dans ladite deuxième zone un solde monétaire initial et en ce que, lors de l'utilisation dudit logiciel, ledit solde est décrémenté en fonction des informations de temps effectivement écoulé ($f_n$) élaborées par ladite unité annexe.

5. Procédé selon la revendication 4, caractérisé en ce que ladite unité principale est apte à émettre vers ladite annexe des informations d'interruption lors de certaines phases d'exécution dudit logiciel et en ce que ladite unité annexe, à la réception d'une information d'interruption, interrompt la mesure du temps effectivement écoulé depuis la commande ($C_n$) précédente et donc la décrémentation du solde monétaire.

6. Procédé selon la revendication 3, caractérisé en ce qu'à la réception de chaque première commande ($C_n$), ladite unité annexe transmet un signal d'acquittement codé à l'aide d'une nouvelle clé secrète ($f_{nh}$) et une nouvelle clé secrète ($f_{nh}$) codée à l'aide de la clé précédente ($f_n$).

7. Système d'exploitation d'un logiciel fourni par un détenteur à un utilisateur comprend :
   un premier support (16) dans lequel est mémorisé ledit logiciel ;
   un deuxième support (24) amovible comportant une zone mémoire (44) apte à recevoir des informations ;
   une unité principale (10) pour charger et exécuter ledit logiciel du premier support ; et
   une unité annexe (20) apte à recevoir ledit deuxième support, ladite unité annexe étant reliée à ladite unité principale pour permettre l'échange d'informations entre ladite unité principale et ladite unité annexe ; ledit système se caractérisant en ce que :
   ledit logiciel stocké dans ledit premier support comprend en plus de l'ensemble des instructions d'exécution, des premières commandes ($C_n$) pour commander le transfert vers ladite unité annexe des résultats intermédiaires (RI) et des deuxièmes commandes ($C_n$) pour demander à ladite unité annexe la fourniture à l'unité centrale de résultats intermédiaires précédents, et
   en ce que ladite unité annexe comprend des moyens pour stocker dans la zone mémoire dudit deuxième support amovible lesdits résultats intermédiaires émis par ladite unité principale et pour transmettre à ladite unité principale des résultats intermédiaires à la réception d'une deuxième commande ($C_n$).

8. Système selon la revendication 7, caractérisé en ce que ledit deuxième support amovible est une carte à mémoire (24) à circuit électronique comprenant des moyens de mémorisation (44) et des moyens de traitement (40).

9. Système selon la revendication 8, caractérisé en ce que, dans ledit logiciel, on associe à au moins certaines desdites commandes ($C_n$) une information de durée ($t_n$) qui est au moins égale au temps d'exécution normale dudit logiciel entre ladite commande ($C_n$) et la commande suivante ($C_{n+1}$), en ce que ladite unité principale comprend des moyens pour émettre vers l'unité annexe ladite information de durée ($t_n$), et en ce que lesdits moyens de traitement de la carte comprennent des moyens pour décompter le temps effectif ($T_n$) qui s'écoule entre ladite commande ($C_n$) et la réception de la commande suivante ($C_{n+1}$) et des moyens pour comparer l'information de durée ($t_n$) et ledit temps effectif ($T_n$).

10. Système selon l'une quelconque des revendications 7 à 9, caractérisé en ce que lesdits moyens de traitement comprennent des moyens d'élaboration de clés secrètes ($f_n$), et des moyens pour élaborer, en réponse à la réception d'une commande ($C_n$), une réponse codée à l'aide de ladite clé ($f_n$), et ladite clé ($f_n$) codée à l'aide de la clé précédente ($f_{n+1}$).

11. Système selon la revendication 9, caractérisé en ce que ladite carte comprend des moyens mémoire (44) pour stocker une information de solde monétaire initial lors de la remise de ladite carte avec ledit premier support (16) contenant ledit logiciel et en ce que lesdits moyens de traitement (40) de la carte comprennent des moyens pour décrémenter ledit solde initial en fonction des informations de temps effectif ($T_n$).

12. Système selon l'une quelconque des revendications 7 à 11, caractérisé en ce que ladite unité annexe (20) est un lecteur de cartes à mémoire (22) apte à transmettre vers le circuit (30) de ladite carte (24) des instructions de lecture et des instructions d'écriture d'informations.

**Patentansprüche**

1. Verfahren zum Betrieb eines Rechnerprogramms mit Hilfe eines Systems mit wenigstens einer Hauptbetriebseinheit des Rechnerprogramms und einer Zusatzbetriebseinheit zur Aufnahme eines entfernbaren Informationsträgers mit wenigstens einer Speicherzone, und um den Informationsaustausch zwischen der Haupteinheit und der Speicherzone zu ermöglichen, dadurch gekennzeichnet, daß es die folgenden Schritte aufweist:

- in dem Rechnerprogramm wird eine gewisse Anzahl von Verbindungsanfragebefehlen mit der Zusatzeinheit definiert, wobei die Befehle erste Befehle ($C_n$) aufweisen, wobei jeder erste Befehl der Erstellung eines Zwischenergebnisses für das Rechnerprogramm zugeordnet ist, und zweite Befehle ($C_n$) aufweisen, wobei jeder zweite Befehl einer Abfrage eines Zwischenergebnisses zugeornet ist, um die Durchführung des Rechnerprogramms zu ermöglichen;
- bei Auftauchen eines jeden ersten Befehls ($C_n$) wird in die Speicherzone des entfernbaren Trägers das zugeordnete Zwischenergebnis transferiert, damit das Zwischenergebnis in der Haupteinheit nicht mehr zur Verfügung steht; und
- beim Auftauchen eines jeden zweiten Befehls ($C_n$) wird in der Speicherzone des entfernbaren Trägers ein Zwischenergebnis gelesen, und dieses zur Haupteinheit übertragen, wodurch das Rechnerprogramm nur dann vollständig ausgeführt werden kann, wenn der geeignete entfernbare Träger in der Zusatzeinheit vorhanden ist.

2. Verfahren nach Anspruch 1, dadurch gekennzeichnet, daß in dem Rechnerprogramm wenigstens gewisse Befehle ($C_n$) einer Zeitdauerinformation ($t_n$) zugeordnet werden, die mindestens gleich der normalen Ausführungszeit des Rechnerprogramms zwischen dem Befehl ($C_n$) und dem nachfolgenden Befehl ($C_{n+1}$) ist; der Zusatzeinheit die Zeitdauerinformation ($t_n$) übertragen wird, und in der Zusatzeinheit die Zeit, die tatsächlich zwischen dem Empfang der beiden aufeinanderfolgenden Befehle und der Zeitdauerinformation ($t_n$) verstreicht, verglichen wird; und der Zugang zur Zusatzeinheit in Abhängigkeit des Ergebnisses des Vergleichs gehemmt wird oder nicht.

3. Verfahren nach einem der Ansprüche 1 oder 2, dadurch gekennzeichnet, daß bei der Aufnahme eines jeden zweiten Befehls ($C_n$) die Zusatzeinheit eine Antwort, die mit Hilfe eines neuen Geheimschlüssels ($f_{n+1}$) codiert ist, und einen neuen Geheimschlüssel ($f_{n+1}$), der mit Hilfe des vorhergehenden Schlüssels ($f_n$) codiert ist, überträgt.

4. Verfahren nach Anspruch 2, bei dem das Rechnerprogramm durch einen Besitzer einem Benutzer geliehen wird, dadurch gekennzeichnet, daß weiterhin in der Speicherzone des entfernbaren Trägers eine zweite Zone von Geldsalden definiert wird, daß im Augenblick des Lieferns des Rechnerprogramms in diese zweite Zone ein Anfangsgeldsaldo eingeschrieben wird, und daß, bei der Verwendung des Programms, dieser Betrag in Abhängigkeit der Informationen der tatsächlich verstrichenen Zeit ($f_n$), die von der Zusatzeinheit erarbeitet wurden, verringert wird.

5. Verfahren nach Anspruch 4, dadurch gekennzeichnet, daß die Haupteinheit in der Lage ist, zur Zusatzeinheit Unterbrechungsinformationen bei gewissen Ausführungsphasen des Rechnerprogramms auszugeben, und daß die Zusatzeinheit beim Empfang einer Unterbrechungsinformation die Messung der tatsächlich verstrichenen Zeit seit dem vorhergehenden Befehl ($C_n$) und somit die Verringerungdes Geldsaldos unterbricht.

6. Verfahren nach Anspruch 3, dadurch gekennzeichnet, daß bei der Aufnahme eines jeden ersten Befehls ($C_n$) die Zusatzeinheit ein Begleichungssignal, das mit Hilfe eines neuen Geheimschlüssels ($f_{nh}$) codiert ist, und einen neuen Geheimschlüssel ($f_{nh}$) überträgt, der mit Hilfe des vorhergehenden Schlüssels ($f_n$) codiert ist.

7. Einrichtung zum Betrieb eines Rechnerprogramms, geliefert von einem Besitzer zu einem Verwender mit:

einem ersten Träger (16), in dem das Rechnerprogramm gespeichert ist; einem zweiten entfernbaren Träger (24), der eine Speicherzone (44) aufweist, die geeignet ist, Informationen aufzunehmen;

einer Haupteinheit (10) zum Laden und Ausführen des Rechnerprogramms des ersten Trägers; und

einer Zusatzeinheit (20), die in der Lage ist, den zweiten Träger aufzunehmen, wobei die Zusatzeinheit mit der Haupteinheit verbunden ist, um den Informationsaustausch zwischen der Haupteinheit und der Zusatzeinheit zu ermöglichen, wobei die Einrichtung dadurch gekennzeichnet ist, daß:

das in dem ersten Träger gespeicherte Rechnerprogramm über die Gesamtheit der Ausführungsanweisungen hinaus erste Befehle ($C_n$) zum Steuern der Übertragung von Zwischenergebnissen (RI) zur Zusatzeinheit, und zweite Befehle ($C_n$) aufweist, um von der Zusatzeinheit die Lieferung zur Zentraleinheit von vorhergehenden Zwischenergebnissen anzufordern, und daß die Zusatzeinheit Einrichtungen zum Speichern in der Speicherzone des entfernbaren zweiten Trägers, der Zwischenergebnisse, die von der Haupteinheit ausgegeben werden, und zum Übertragen der Zwischenergebnisse beim Empfang eines zweiten Befehls ($C_n$) zur Haupteinheit, aufweist.

8. Einrichtung nach Anspruch 7, dadurch gekennzeichnet, daß der zweite entfernbare Träger eine Speicherkarte (24) mit elektronischem Schaltkreis ist, die Speichereinrichtungen (44) und Verarbeitungseinrichtunger (40) aufweist.

9. Einrichtung nach Anspruch 8, dadurch gekennzeichnet, daß in dem Rechnerprogramm wenigstens gewissen oder bestimmten der Befehle $(C_n)$ eine Zeitdauerinformation $(t_n)$ zugeordnet wird, die wenigstens gleich der normalen Ausführungszeit des Rechnerprogramms zwischem dem genannten Befehl $(C_n)$ und dem nachfolgenden Befehl $(C_{n+1})$ ist, daß die Haupteinheit Einrichtungen aufweist, um zu den Zusatzeinrichtungen die Zeitdauerinformation $(t_n)$ auszugeben, und daß die Verarbeitungseinrichtungen der Karte Einrichtungen zum Abziehen der effektiven Zeit $(T_n)$ aufweisen, die zwischen dem Befehl $(C_n)$ und der Aufnahme des nachfolgenden Befehls $(C_{n+1})$ verstreicht und Einrichtungen zum Vergleichen der Zeitdauerinformation $(t_n)$ und der tatsächlichen Zeit $(T_n)$ aufweisen.

10. System nach einem der Ansprüche 7 bis 9, dadurch gekennzeichnet, daß die Verarbeitungseinrichtungen Einrichtungen zum Ausarbeiten von Geheimschlüsseln $(f_n)$, und Einrichtungen zum Ausarbeiten, in Antwort auf die Aufnahme eines Befehls $(C_n)$, einer Antwort, die mit Hilfe des Schlüssels $(f_n)$ codiert ist, und des Schlüssels $(f_n)$ aufweisen, der mit Hilfe des vorhergehenden Schlüssels $(f_{n+1})$ codiert ist.

11. Einrichtung nach Anspruch 9, dadurch gekennzeichnet, daß die Karte Speichereinrichtungen (44) zum Speichern einer Anfangsgeldsaldo Information beim Entfernen der Karte mit dem ersten Träger (16), der das Rechenprogramm enthält, aufweist, und daß die Bearbeitungseinrichtungen (40) der Karte Einrichtungen zum Verringern des Ausgangssaldos in Abhängigkeit der tatsächlichen Zeitinformation $(T_n)$ aufweisen.

12. Einrichtung nach einem der Ansprüche 7 bis 11, dadurch gekennzeichnet, daß die Zusatzeinheit (20) ein Leser von Speicherkarten (22) ist, der in der Lage ist, zu dem Kreis (30) der Karte (24) Lesebefehle und Informationsschreibbefehle zu übertragen.

**Claims**

1. Method of running software by means of a system comprising at least a main apparatus on which said software is run and an auxiliary running device for receiving a removable data medium including at least a memory zone and suitable for interchanging information between said main apparatus and said memory zone, characterized in that it comprises the steps of :
   - defining in said software a certain number of commands requesting communication with said auxiliary device, said commands comprising first commands $(C_n)$, each first command being associated with the generation of an intermediate result for said software, and second commands $(C_n)$, each second command being associated with a request for an intermediate result in order to enable the software execution to continue;
   - on the appearance of each first command $(C_n)$, transferring into said memory zone of the removable data medium said associated intermediate results so that said intermediate result is no longer available in the main apparatus; and
   - on the appearance of each second command $(C_n)$, reading one of said intermediate results from said memory zone and transferring same in said main unit, thereby ensuring that said software cannot be executed in full unless said suitable removable medium is present in said auxiliary device.

2. Method according to claim 1, characterized in that at least some of the commands $(C_n)$, in said software are associated a duration information $(t_n)$ which is at least equal to the normal execution time of said software between said command $(C_n)$ and the following command $(C_{n+1})$; said duration information $(t_n)$ being transmitted to said auxiliary device, and being compared in said auxiliary device with the time that effectively elapses between receiving two successive commands and the duration information $(t_n)$; the access to said auxiliary device being inhibited or not inhibited as a function of the result of said comparison.

3. Method according to any one of claims 1 and 2, characterized in that on receiving each second command $(C_n)$, said auxiliary device transmits a reply which is encoded on the basis of a new secret key $(f_{n+1})$ together with the new secret key $(f_{n+1})$ encoded using the preceding key $(f_n)$.

4. Method according to claim 2, in which said software is rented by an owner to a user, characterized in that a pecuniary balance second zone is additionally defined in the memory zone of said removable medium, in that an initial pecuniary balance is written into said second zone when the software is supplied, and in that said balance is decremented during utilization of said software as a function of the information relating to time

effectively elapsed ($f_n$) as generated by said auxiliary device.

5. Method according to claim 4, characterized in that said main apparatus is suitable for transmitting interrupt information to said auxiliary device during certain stages of the execution of said software, and in that on receiving interrupt information, said auxiliary device interrupts its measurement of the time effectively elapsed since the preceding command ($C_n$), thus interrupting the decrementation of the pecuniary balance.

6. Method according to claim 3, characterized in that on receiving each first command ($C_n$), said auxiliary device transmits an acknowledgement signal which is encoded using a new secret key ($f_{nh}$) and a new secret key ($f_{nh}$) which is encoded using the preceding key ($f_n$).

7. System for running software provided by an owner to a user, comprising:

a first medium (16) in which said software is stored;

a removable second medium (24) including a memory zone (44) suitable for receiving information;

a main apparatus (10) for loading said software from the first medium, and for running it; and

an auxiliary device (20) suitable for receiving said second medium, said auxiliary device being connected to said main apparatus to enable information to be interchanged between said main apparatus and said auxiliary device; said system being characterized in that:

said software stored in said first medium includes a set of instructions for execution together with first commands ($C_n$) for causing intermediate results (RI) to be transferred to said auxiliary device and second commands ($C_n$) for requesting said auxiliary device to provide preceding intermediate results to the main apparatus, and

in that said auxiliary device comprises means for storing said intermediate results transmitted by said main apparatus in the memory zone of said second removable medium, and for transmitting intermediate results to said main apparatus on receiving a second command ($C_n$).

8. System according to claim 7, characterized in that second removable medium is an electronic circuit memory card (24) including memory means (44) and processor means (40).

9. System according to claim 8, characterized in that, said software associates at least some of

said commands ($C_n$) with duration information ($t_n$) which is at least equal to the normal execution time of said software between said command ($C_n$) and the following command ($C_{n+1}$), in that said main apparatus includes means for transmitting said duration information ($t_n$) to said auxiliary device, and in that said processor means of the card include means for counting the effective time ($T_n$) that elapses between said command ($C_n$) and receiving the following command ($C_{n+1}$), and means for comparing the duration information ($t_n$) said effective time ($T_n$).

10. System according to any one of claims 7 to 9, characterized in that said processor means include means for generating secret keys ($f_n$) and means responsive to receiving a command ($C_n$) for generating an encoded response using said key ($f_n$) and said key ($f_n$) encoded using the preceding key ($f_{n-1}$).

11. System according to claim 9, characterized in that said card includes memory means (44) for storing initial pecuniary balance information when said card is issued with said first medium (16) containing said software and in that said card processor means (40) include means for decrementing said initial balance as a function of the effective time information ($T_n$).

12. System according to any one of claims 7 to 11, characterized in that said auxiliary device (20) is a memory card reader (22) suitable for transmitting data read instructions and data write instructions to the circuit (30) of said card (24).

FIG.1

FIG.2

## FIG.3

FIG.4